# EUROPÄISCHE PATENTANMELDUNG

(11) **EP 1 168 875 A1**
(43) Veröffentlichungstag der Anmeldung: **02.01.2002**
(21) Anmeldenummer: 01115025.7
(22) Anmeldetag: 20.06.2001
(51) Int. Cl.: H04Q 7/38

(54) **Verfahren sowie Vorrichtung zur Positionsbestimmung von Teilnehmergeräten eines Funkkommunikationssystems**

(30) Priorität: 21.06.2000 DE 10038278; 27.06.2000 DE 10031178; 28.06.2000 DE 10031495; 21.08.2000 DE 10040789
(71) Anmelder: SIEMENS AKTIENGESELLSCHAFT, 80333 München (DE)
(72) Erfinder: Bär, Siegfried, 75179 Pforzheim (DE); Hyung-Nam, Choi, 22117 Hamburg (DE); Gottschalk, Thomas, 38126 Braunschweig (DE); Kowalewski, Frank, Dr., 38228 Salzgitter (DE)

(57) **Zusammenfassung**

Verfahren zur Positionsbestimmung (PO1) mindestens eines Teilnehmergerätes (UE31) eines Funkkommunikationssystems (MCS), bei dem Funksignale (LS111) auf eine Vielzahl von aufeinanderfolgenden Zeitschlitzen (SL11 mit SL25) verteilt werden. Bei mindestens einem Zeitschlitz (SL12) wird derjenige Zeitbereich (DA1), der für die Übertragung von Nutzdaten-/Nutznachrichten vorbelegt ist, anstelledessen teilweise oder ganz zum Senden und/oder Empfangen mindestens eines Meßsignals (LCS1) auf der Übertragungsstrecke zwischen dem jeweilig zu ortenden Teilnehmergerät (UE31) und mindestens einer Basisstation (BS1), die von der Basisstation (BS3) in der Aufenthalts-Funkzelle (CE3) des Teilnehmergeräts (UE31) verschieden ist, bereitgestellt.

## Beschreibung

Verfahren sowie Vorrichtung zur Positionsbestimmung von Teilnehmergeräten eines Funkkommunikationssystems.

In Funkkommunikationssystemen wie z.B. nach dem GSM (global system mobile communication) oder UMTS (universal mobile telecommunication system) Standard kann es in der Praxis gegebenenfalls von Interesse sein, den aktuellen Standort bzw. Aufenthaltsort eines bestimmten Teilnehmergeräts, insbesondere Mobilfunkgeräts, zu bestimmen. Eine solche Positionsbestimmung kann beispielsweise für die Routenplanung eines Kraftfahrzeuges oder eines sonstigen Fahrzeuges verwendet werden. Genauso kann es gegebenenfalls auch für einen Netzbetreiber wünschenswert sein, z.B. zur Netzoptimierung, Netzsteuerung, usw. zu ermitteln, an welchen Orten seines Funknetzes sich seine Teilnehmer aufhalten. Daneben können solche Standortanalysen für Polizei, Sicherheitsdienste, Rettungsdienste, usw. ebenfalls von Interesse sein. Die Anforderungen an eine Positionsbestimmung des jeweilige Teilnehmergeräts kann somit sowohl vom jeweiligen Teilnehmer selbst, als auch von der Netzinfrastrukturseite her kommen.

Der Erfindung liegt die Aufgabe zu Grunde, einen Weg aufzuzeigen, wie bei einem Funkkommunikationssystem eine Positionsbestimmung des jeweiligen Teilnehmergeräts in einfacher sowie zuverlässiger Weise ermöglicht werden kann. Gemäß der Erfindung wird diese Aufgabe durch die Merkmale des Anspruchs 1 gelöst.

Dadurch, daß derjenige Zeitbereich bzw. Zeitabschnitt innerhalb mindestens eines Zeitschlitzes vorgegebener Unterteilungsstruktur teilweise oder ganz zum Senden und/oder Empfang mindestens eines Meßsignals bereitgestellt wird, und nicht derjenige Zeitbereich innerhalb der Zeitschlitzstruktur, der für die Übertragung von Parametern zur Kanalschätzung abgestellt ist, sind Störungen bzw. Beeinträchtigungen des jeweiligen Mobilfunkkanals der Luftschnittstelle weitgehend vermieden. Weiterhin ist der jeweilige Zeitabschnitt zur Übertragung von Nutzdaten-/Nutznachrichten innerhalb der vorgegebenen Zeitschlitzstruktur ausreichend lang, so daß sich während dessen Zeitdauer mindestens ein Meßzeitschlitz zum Senden/oder Empfangen mindestens eines Meßsignals einfügen läßt. Darüberhinaus ist es nicht erforderlich, zusätzliche Komponenten wie z.B. eine zusätzliche GPS-Einheit (global-positioning-system) in das jeweilige Teilnehmergerät zur Positionsbestimmung zu integrieren. Die optionale Möglichkeit, im Bedarfsfall eine Positionsbestimmung des jeweiligen Teilnehmergerätes durchführen zu können, vermeidet also weitgehend allzu große Änderungen in der Netzinfrastruktur sowohl hardware- als auch softwaremäßig betrachtet. Die zusätzliche Implementierung der Positionsbestimmung eines bestimmten, gewüschten Teilnehmergeräts, das sich innerhalb der Netzstruktur des Funkkommunikationssystems aufhält, ist somit im Bedarfsfall in einfacher Weise ohne allzu großen zusätzlichen Aufwand sowohl auf der Netzseite als auch im Teilnehmergerät selbst durchführbar.

Die Erfindung betrifft weiterhin eine Vorrichtung zur Positionsbestimmung mindestens eines Teilnehmergerätes eines Funkkommunikationssystems, das nach dem erfindungsgemäßen Verfahren und/oder einer dessen Weiterbildungen betrieben wird.

Sonstige Weiterbildungen der Erfindung sind in den Unteransprüchen wiedergegeben.

Die Erfindung und Ihre Weiterbildungen werden nachfolgend anhand von Zeichnungen näher erläutert.

Es zeigen:
- Figur 1: in schematischer Darstellung ein Funkkommunikationssystem, insbesondere Mobilfunksystem,
- Figur 2: in schematischer Darstellung eine erfindungsgemäße Möglichkeit zur Bestimmung der örtlichen Lage eines Teilnehmergeräts innerhalb der Funkzellenstruktur des Funkkommunikationssystems nach Figur 1,
- Figur 3: in schematischer Darstellung die zeitliche Struktur eines Zeitrahmens als Abfolge einer Vielzahl von Zeitschlitzen bei der Übertragung von Funksignalen im Funkkommunikationssystem nach Figur 1,
- Figur 4: in schematischer Darstellung die Laufzeitverhältnisse eines Meßsignals in Relation zum Startzeitpunkt eines der Zeitschlitze der Zeitrahmenstruktur nach Figur 3, wobei das Meßsignal nach dem erfindungsgemäßen Verfahren im Funkkommunikationssystem von Figur 1 zu dem jeweils zu lokalisierenden Teilnehmergerät von mindestens einer Basisstation gesendet wird, die der Aufenhalts-Funkzelle dieses Teilnehmergeräts benachbart ist,
- Figuren 5, 6: jeweils in schematischer Darstellung zwei verschiedene Zeitschlitz-Strukturen des TDD-Mode im UTMS-Standard beim Zeitmultiplex-Übertragungsverfahren des Funkkommunikationssystems nach Figur 1,
- Figuren 7 mit 9: jeweils in schematischer Darstellung drei verschieden Möglichkeiten zur Ausnutzung der vorgegebenen Zeitschlitzstrukturen nach den Figuren 5, 6 zur Durchführung des erfindungsgemäßen Verfahrens, und
- Figur 10: schematisch die Signalisierung aus der Luftschnittstelle zwischen dem jeweilig zu ortenden Teilnehmergerät und der Basisstation in dessen AufenthaltsFunkzelle sowie zwei Basisstationen in benachbarten Funkzellen zur erfindungsgemäßen Positionsbestimmung.

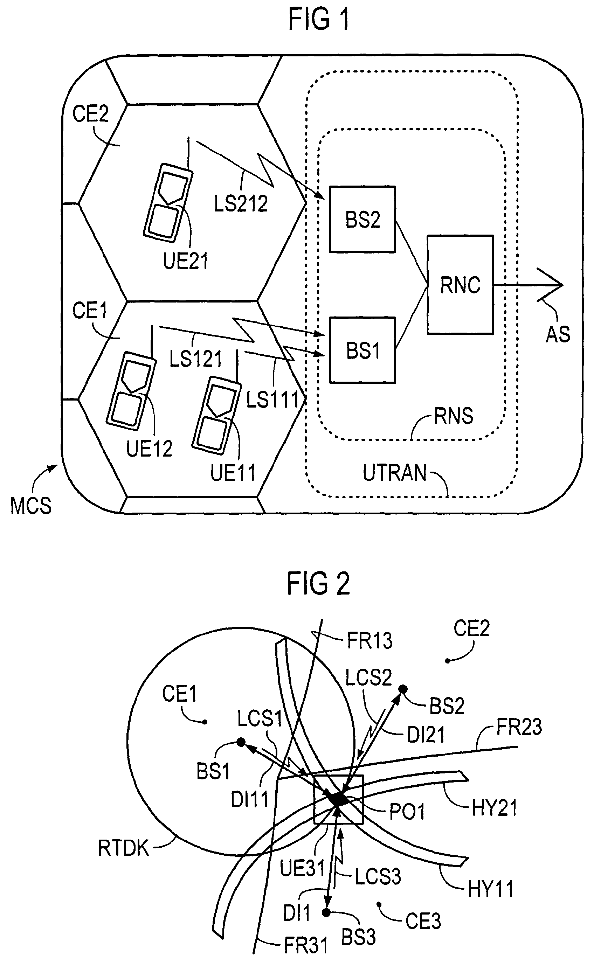

Elemente mit gleicher Funktion und Wirkungsweise sind in den Figuren 1 mit 10 jeweils mit denselben Bezugszeichen versehen.

Figur 1 zeigt in schematischer Darstellung ein Funkkommunikationssystem MCS, insbesondere Mobilfunksystem, das eine Vielzahl von Basisstationen mit zugeordneten Funkzellen aufweist. Der zeichnerischen Übersichtlichkeit halber sind in der Figur 1 lediglich 2 Funkzellen CE1, CE2 dieses Funkkommunikationssystems MCS jeweils als Sechseck angedeutet. Jeder Funkzelle wie z.B. CE1, CE2 ist dabei jeweils eine Basisstation wie z.B. BS1, BS2 zugeordnet, d.h. das Funkkommunikationssystem MCS ist zellular aufgebaut, so daß der Funkbereich der jeweiligen Funkzelle von einer bestimmten zugeordneten Basisstation aus bedient bzw. kontrolliert wird. Die jeweilige Basisstation ist vorzugsweise durch mindestens einen Funksender und mindestens einen Funkempfänger gebildet. Sie weist vorzugsweise mindestens eine Sendeantenne und/oder Empfangsantenne auf. Zusätzlich oder unabhängig zu ihrer Funktion, eine Funkverbindung zu Teilnehmergeräten des Funkkommunikationssystems MCS bereitzustellen, kann die jeweilige Basisstation jeweils für die Daten-/Nachrichtenübermittlung zu einem etwaig vorhandenen Festnetz sorgen.

Im zellularen Funkkommunikationsystem MCS werden Funksignale wie z.B. Nachrichten und/oder Datensignale über mindestens eine vordefinierte Luftschnittstelle zwischen mindestens einem Teilnehmergerät, insbesondere Mobilfunkgerät wie z.B. Zellulartelefon (Handy), und mindestens einer Basisstation vorzugsweise nach einem Zeitmultiplex-Vielfachzugriffs- Übertragungsverfahren übertragen. Es ist vorzugsweise als Mobilfunksystem nach dem UTMS-Standard (= universal mobile telecommunication system) ausgebildet. Bei einem solchen Funkkommunikationssystem nach dem UMTS-Standard werden Funksignale für mindestens eine Luftschnittstelle zwischen dem jeweiligen Teilnehmergerät, insbesondere Mobilfunkgerät, und mindestens einer Basisstation in mindestens einer Funkzelle des Kommunikationssystems insbesondere nach einem kombinierten TDMA/CDMA - Vielfachzugriffs-Übertragungsverfahren übertragen. Dabei wird bei der Funkübertragung über die Luftschnittstelle zwischen dem jeweiligen Teilnehmergerät und der jeweilig zugeordneten Basisstation (und umgekehrt) eine zeitliche Aufteilung der Funksignale in eine Vielzahl von aufeinanderfolgenden Zeitschlitzen vorgebbarer Zeitdauer sowie vorgebbarer Zeitrahmenstruktur vorgenommen. Mehrere Teilnehmer, die zeitgleich in derselben Funktionzelle mit der dortigen Basisstation in Kommunikation treten, werden in Kombination zur Zeitmultiplexaufteilung zweckmäßigerweise durch orthogonale Codes, insbesondere nach dem CDMA-Prinzip (code division multiple access), voneinander hinsichtlich ihrer Nachrichten/Datenverbindungen separiert. Detaillierte Angaben zum CDMA-Verfahren sind dabei insbesondere in "CDMA for wireless personal communications, R. Prasad, Artec House Publishers, London-Boston; ISBN 0-89006-571-3; 1996" angegeben. Insbesondere wird das Funkkommunikationssystem im sogenannten TDD-Mode betrieben (TDD = time division duplex). Im TDD-Mode wird eine getrennte Signalübertragung in up- und downling Richtung (uplink = Signalübertragung vom jeweiligen Mobilfunkgerät zur zugeordneten Basisstation, downlink = Signalübertragung von der jeweilig zugeordneten Basisstation zum Mobilfunkgerät) durch eine entsprechende separate Zuweisung von Zeitschlitzen mittels eines Zeitmultiplex-Verfahrens erreicht. Dabei wird nur eine einzige Trägerfrequenz zur Signalübertragung in up-und downlink - Richtung zwischen dem jeweiligen Teilnehmergerät seiner zugeordneten Basisstation verwendet.

Als Teilnehmergeräte sind vorzugsweise Mobilfunktelefone, insbesondere sogenannte Handys vorgesehen. Daneben können als Teilnehmergeräte auch sonstige Nachrichten- und/oder Daten-übertragungsgeräte wie z.B. Internet-Endgeräte, Computer, Fernsehgeräte, Notebooks, Faxgeräte, usw. mit zugeordneter Funkeinheit zum Kommunikationsverkehr "on air", d.h. über mindestens eine Luftschnittstelle, vorgesehen sein und Komponenten des Funkkommunikationsnetzes bilden. Die Teilnehmergeräte können dabei sowohl stationär, d.h. ortsfest im Funknetz angeordnet sein, als auch sich mobil bzw. portable an wechselnden Orten, aufhalten.

Im aktuellen Funkverkehrszustand des Funkkommunikationssystems von Figur 1 halten sich in der Funkzelle CE1 beispielsweise die beiden Teilnehmergeräte UE11, UE12 auf. Da deren Aufenthaltsfunkzelle CE1 von der Basisstation BS1 aus bedient wird, wird bei Bedarf vom jeweiligen Teilnehmergerät UE11, UE12 zu dieser Basisstation BS1 jeweils eine Funkverbindung aufgebaut und über diese Luftschnittstelle kommuniziert. Die aktive Kommunikationsverbindung zwischen dem jeweiligen Teilnehmergerät UE11, UE12 in der Funkzelle CE1 zur Basisstation BS1 ist in der Figur 1 jeweils durch ein Funksignal LS111, LS121 angedeutet. In der benachbarten Funkzelle CE2 befindet sich in der Figur 1 beispielhaft ein einzelnes Teilnehmergerät UE21. Da dieser Funkzelle CE2 die Basisstation BS2 zugeordnet ist, wird bei Bedarf bzw. auf Anforderung eine Funkverbindung LS212 zwischen dem Teilnehmergerät und dieser Basisstation BS2 bereitgestellt. Die beiden Basisstationen BS1, BS2 stehen über Funk oder über Festleitungen mit dem sogenannten Radio-Network-Controller RNC zum Daten-/Nachrichtenaustausch in Verbindung. Die Basisstationen und der Radio-Network-Controller, der der Steuerung und Signalisierung im Funkkommunikationsnetz dient, sind dabei im sogenannten Radio-Network-System RNS zusammengefaßt. Dies ist in der Figur 1 in einem punktierten Rahmen angedeutet. Der Radio-Netzwork-Kontroller RNC stellt insbesondere die Signalisierung zu Funktionsblöcken höherer Schichten im Funknetz her, was in Figur 1 durch einen Pfeil AS veranschaulicht ist. Das Radio-Network-System RNS bildet wiederum eine Untereinheit im sogenannten universal terrestrial radio access network UTRAN. Einzelheiten zum Schichtenaufbau eines UMTS-TDD-Mode-Funknetzes und dessen Funktionseinheiten sind insbesondere in der Spezifikation 3G TS 25.221 "physical channels and mapping of transport channels onto to physical channels (TDD), Version 3.2.0 (2000-03); 3G TS 25.305 "stage 2 functional specification of location Services", Version 3.1.0 (2000-03); 3G TS 25.224: "physical layer procedures (TDD)", Version 3.2.0 (2000-03); 3G TS 25.225 "physical layer measurements (TDD)", Version 3.2.0, (2000-03) angegeben.

Figur 2 veranschaulicht, wie z.B. für ein Mobilfunkgerät UE31 dessen Ortsposition PO1 insbesondere im UMTS-TDD-Mode des Funkkommunikationssystems MCS ermittelt werden kann. In der Figur 2 sind beispielhaft 3 Basisstationen BS1, BS2 sowie BS3 des Funkkommunikationssystems MCS eingezeichnet, denen jeweils Mobilfunkzellen CE1, CE2 sowie CE3 zugeordnet sind. Innerhalb der jeweiligen Funkzelle ist jeweils eine Basisstation für die Kommunikation mit dem sich dort jeweils aufhaltenden Teilnehmergerät zuständig. Vorzugsweise ist die jeweilige Basisstation wie z.B. BS1 annäherungsweise im Zentrum der jeweiligen Funkzelle wie z.B. CE1 angeordnet. Die Grenzen dieser Funkversorgungsgebiete bzw. Funkzellen CE1 mit CE3 der Basisstationen BS1 mit BS3 sind in der Figur 2 durch Grenzlinien FR13, FR23, FR31 angedeutet. Im vorliegenden Ausführungsbeispiel wird der Einfachheit halber angenommen, daß an diesen Funkzellengrenzen der Übergang des Kommunikationsverkehrs jeweils insbesondere schlagartig erfolgt, d.h. es wird genau an den Grenzen der Funkzellen ein Wechsel der Zuständigkeit der Basisstationen (= handover) vorgenommen. Hier im Ausführungsbeispiel befindet sich in der Funkzelle CE3 als Teilnehmergerät des Funkkommunikationssystems MCS das Mobilfunkgerät UE31, insbesondere Handy, dessen örtliche Position z.B. für einen bestimmten Dienst, wie z.B. Routenplanung für ein Kraftfahrzeug, bestimmt werden soll.

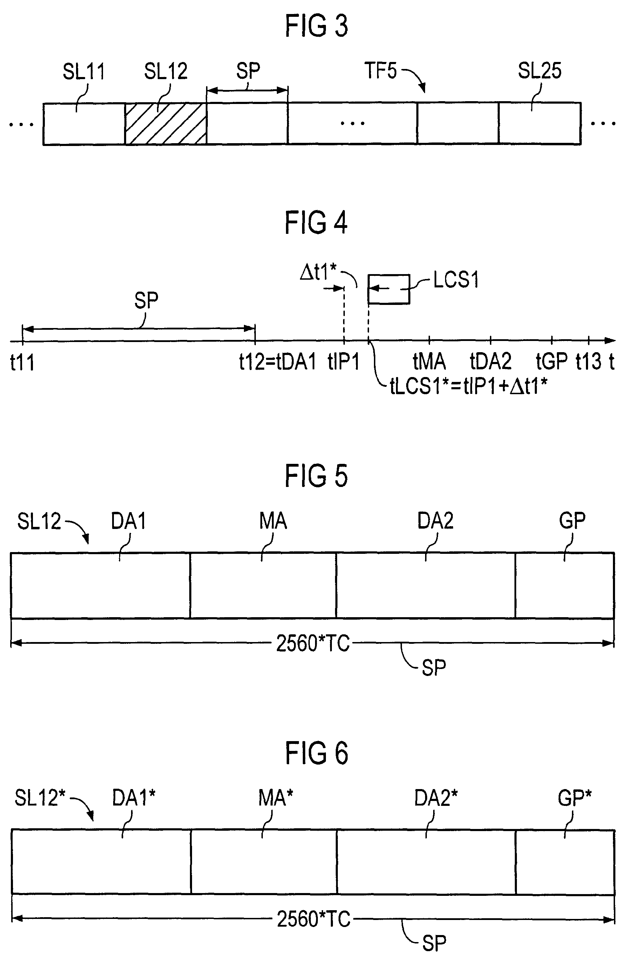

Figur 3 zeigt beispielhaft in schematischer Darstellung einen Zeitrahmen TF5 des verwendeten Zeitmultiplex- Verfahrens im Funkkommunikationssystem MCS. Er weist eine Vielzahl von einzelnen, zeitlich nacheinanderfolgenden Zeitschlitzen SL11 mit SL25 von jeweils derselben konstanten Zeitdauer SP auf. Solche Zeitrahmen folgen dabei sukzessive, d.h. fortlaufend bei den Nachrichtenübertragung aufeinander. Dies ist in der Figur 3 durch jeweils 3 Punkte am Anfang und Ende des Zeitrahmens TF5 angedeutet. Die Struktur des Zeitrahmens TF5 entspricht der Slotstruktur eines sogenannten TDD-Frames (TDD = time division duplex; frame = Zeitrahmen). Ein TDD-frame wie z.B. TF5 weist dabei vorzugsweise insgesamt 15 Zeitschlitze (= time slots) SL11 mit SL25 auf. Dabei kann jeder Zeitschlitz eindeutig entweder für Übertragungen im uplink oder downlink Verkehr reserviert bzw. bereitgestellt sein. Diese Zeitrahmen bzw. frames wiederholen sich dabei vorzugsweise kontinuierlich. Beim UMTS-TDD-Mode wird die Nachrichtenübertragung vorzugsweise lediglich über ein einziges Trägerfrequenzband, insbesondere eine einzige Trägerfrequenz vorgenommen. Durch Zuweisung von unterschiedlichen Zeitschlitzen erfolgt eine Trennung der up- und downlink Richtung für den Nachrichtenverkehr bzw. Datenaustausch. Mehrere Teilnehmer, die gleichzeitig auf die Netzresourcen zugreifen, d.h. gleichzeitig in derselben Funkzelle Nachrichtensignale bzw. Datensignale senden und/oder empfangen, werden dabei vorzugsweise über sogenannte orthogonale Codes, vorzugsweise nach dem CDMA-Verfahren, voneinander funktechnisch getrennt.

In der Figur 5 ist schematisch der zeitliche Aufbau bzw. die zeitliche Struktur, d.h. die zeitliche Unterteilung des jeweiligen Zeitschlitzes ( = time slot) wie z.B. SL12 des Zeitrahmens TF5 von Figur 3 dargestellt. Der jeweilige Zeitschlitz wie z.B. SL12 weist 4 Zeitabschnitte bzw. Zeitsektionen DA1, MA, DA2, GP auf, die für die Übertragung von verschiedenen Gruppen von Funksignaltypen reserviert sind. Der erste Zeitabschnitt DA1 des Zeitschlitzes SL12 ist für die Übertragung von Nutzdaten bzw. Nutznachrichten DA1 - sogenannten data symbols - allokiert, d.h. vorbelegt. Danach werden im zweiten, nachfolgenden Zeitabschnitt bzw. -block MA sogenannte midambles übertragen. Dies sind Signale für die Kanalschätzung und/oder Synchronisation des jeweiligen Teilnehmergeräts und/oder der jeweiligen Basisstation. Aufgrund dieser Kanalschätzparameter wird insbesondere eine Kanalentzerrung im jeweiligen Mobilfunkgerät und/oder der jeweiligen Basisstation durchgeführt. Nach diesem Zeitblock MA erfolgt wiederum ein Zeitabschnitt DA2 für eine weitere Übertragung von Nutzdaten bzw. Nutzsignalen DA2. Dadurch, daß die Midambles für die Kanalschätzung zwischen den beiden Blöcken DA1, DA2 mit den Nutzdaten bzw. Nutzsignalen übertragen werden, wird weitgehend sichergestellt, daß der jeweilige Funkkanal optimal im Zeitmittel entzerrt werden kann. Während des vierten, letzten Zeitabschnitts GP des Zeitschlitzes SL12 wird schließlich keine Signalübertragung vorgenommen, d.h. diese sogenannte guard period ist unbelegt, um eine Sicherheitszeitlücke bzw. Totzeit zwischen den einzelnen, zeitlich nacheinander übertragenen Zeitschlitzen bereitzustellen. Dadurch werden insbesondere störende Signalüberlagerungen bzw. Interferenzen von Signalen aufeinanderfolgender Slots, die etwaig durch Signallaufzeitunterschiede wie z.B. bei Mehrwegeausbreitung auftreten, weitgehend vermieden. Auf diese Weise ist eine einwandfreie Signalübertragung über die Luftschnittstelle weitgehend sichergestellt. Insgesamt betrachtet kann also während des jeweiligen Zeitschlitzes die Funkübertragung eines sogenannten Burts (Datenbüschel), der die Symbole (Chips) für die erste Gruppe von Nutzdaten, den Midambles, der zweiten Gruppe von Nutzdaten, sowie der guard period enthält, mit vorgegebener zeitlicher Aufteilung bzw.

Sektionierung entsprechend diesen Symbolgruppen erfolgen. Detailierte Angaben zu Zeitrahmen und Zeitschlitzstruktur sind im jeweiligen Mobilfunkstandard - hier im Ausführungsbeispiel insbesondere im UMTS-TDD-Standard - gemacht

Zur Erläuterung der erfindungsgemäßen Positionsbestimmung des jeweilig zu ortenden Teilnehmergeräts wird im vorliegenden Ausführungsbeispiel vereinfacht angenommen, daß die Zeitschlitze des jeweiligen Zeitrahmens wie z.B. TF5 von Figur 5 auf die down- und uplink Übertragung zweckmäßigerweise derart aufgeteilt sind, daß die Zuordnung in allen Funkzellen CE1 mit CE3 gleich ist.

Den verschiedenen Sektionen DA1, DA2, MA, GP des jeweiligen Zeitschlitzes wie z.B. SL12 von Figur 5 werden dabei im UMTS-TDD-Mode verschiedene Zeitdauern, d.h. Zeitlängen zugewiesen. In der Figur 5 weist beispielsweise die Sektion DA1 für die Nutzdatenübertragung eine solche Zeitdauer auf, daß Nutzdaten mittels 976 Chips übertragbar sind. Den Midambles, d.h. den Kanalschätzparametern sind in der Zeitschlitzstruktur SL12 von Figur 5 512 Chips vorreserviert. Für die Übermittlung des zweiten Datenblocks DA2 sind wiederum 976 Chips wie beim ersten Datenblock DA1 vorgesehen. Der guard period GP des Zeitschlitzes SL12 von Figur 5 sind schließlich 96 Chips als Totzeit reserviert. Insgesamt weist der Zeitschlitz SL12 von Figur 5 somit eine Gesamtzeitdauer von 2560 Tc zur Übertragung von 2560 Chips auf, wobei Tc die Zeitdauer zur Übertragung eines einzelnen Chips ist. Unter dem Begriff Chip wird dabei ein einzelnes Codierungssymbol verstanden, das bei der Kanalkodierung durch Spreizcodes nach dem UMTS-Standard verwendet wird.

Neben diesem Typ von TDD-Zeitschlitzstruktur von Figur 5 ist im UMTS-TDD-Mode noch ein zweiter Typ SL12* einer Zeitschlitzstruktur vorgesehen, der entsprechend Figur 6 eine andere zeitliche Sektionierung aufweist. Die Abfolge von einem ersten Datenblock DA1*, sogenannten midambles MA* zur Kanalschätzung und/oder -synchronisation, einem zweiten Datenblock DA2* und schließlich einer abschließenden guard period GP entspricht dabei der Zeitschlitzstruktur SL12 von Figur 5. Allerdings sind jetzt die zeitlichen Längen dieser Übertragungsblöcke DA1*, MA*, DA2* gegenüber den Zeitlängen der Übertragungsblöcke DA1, MA, DA2 des Zeitschlitzes SL12 von Figur 5 modifiziert. Beim Zeitschlitztyp SL12* nach Figur 6 sind für die Übertragung des ersten Datenblocks DA1* 1104 Chips vorgesehen, d.h. mehr Chips als beim Zeitschlitztyp entsprechend SL12 von Figur 5. Dem mitamble-Block MA* des Zeitschlitzes SL12* von Figur 6 sind hingegen nun lediglich 256 chips, d.h. nur halb so viele Midamble- Symbole wie beim ersten Zeitschlitztyps SL12 von Figur 5 zugeordnet. Die Nutzsignale des zweiten Datenblocks DA2* des Zeitschlitzes SL12* von Figur 6 werden wiederum mittels 1104 Chips wie beim ersten Datenblock DA1* übertragen. Der abschließenden guard period GP sind wie beim ersten Zeitschlitztyp von Figur 5 96 Chips zugeordnet.

Auf diese Weise weisen sowohl der erste als auch zweite Zeitschlitztyp jeweils dieselbe Gesamtlänge von 2560 Tc auf, wobei 2560 die Anzahl der übertragbaren Chips entspricht, und Tc die Zeitdauer zur Übertragung eines einzelnen Chips angibt.

Zusammenfassend betrachtet ist also bei dem jeweiligen Zeitschlitztyp sowohl ein erster Datenblock, als auch ein zweiter Datenblock vorgesehen. Diese sind durch eine sogenannte midamble- Sektion zeitlich voneinander getrennt. Die beiden Datenblöcke werden dabei mittels derselben Anzahl von Chips übertragen. Die beiden Zeitschlitz-Strukturen unterscheiden sich allerdings durch die unterschiedliche Zuordnung von Chips für die Übertragung von Datenblöcken und midambles. Während der erste Zeitschlitztyp für den midamble Block 512 Chips vorsieht, sind dies beim zweiten Zeitschlitztyp nur noch die Hälfte von 256 Chips. Dafür stehen beim zweiten Zeitschlitztyp entsprechend Figur 6 für die jeweilige Datenübertragung im ersten und zweiten Datenblock jeweils zu gleichen Anteilen mehr Chips zur Verfügung.

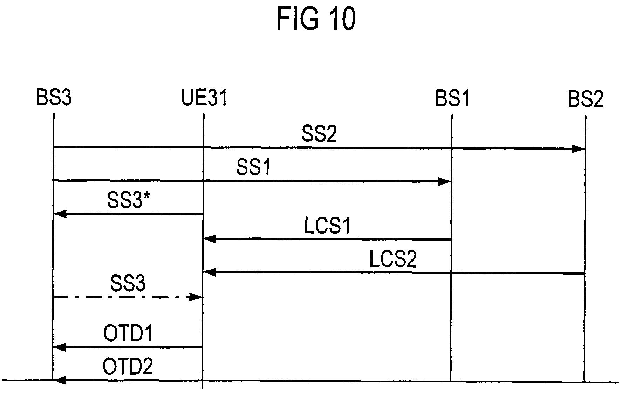

Nach einer ersten Variante kann die örtliche Lage bzw. Position des Mobilfunkgeräts UE31 von Figur 2 in vorteilhafter Weise beispielsweise mittels folgender Signalisierung über dessen Luftschnittstelle ermittelt werden. Das zugehörige Signalisierungschema auf der Luftschnittstelle ist dabei in der Figur 10 schematisch dargestellt; dabei wird eine Signalisierung auf der Luftschnittstelle zwischen dem jeweilig zu ortenden Teilnehmergerät und der Basisstation in dessen Aufenthalts-Funkzelle sowie zwischen dem Teilnehmergerät und zwei weiteren Basisstationen in benachbarten Funkzellen durchgeführt.

Im Mobilfunkgerät UE31 wird z.B. durch automatische Anwahl in dessem Serviceteil oder durch entsprechende Tastenbetätigung dessen Keyboards bzw. Tastatur ein Anforderungssignal SS3* für die Positionsermittlung erzeugt. Dieses Anforderungssignal SS3* wird vom Mobilfunkgerät UE31 an die Basisstation BS3 in seiner Aufenthalts-Funkzelle CE3 gesendet. Dies kann insbesondere über den sogenannten RACH (= random access channel) als common channel der Luftschnittstelle in UMTS erfolgen. Alle Mobilfunkgeräte innerhalb derselben Funkzelle benutzen dabei laufend den RACH in uplink-Richtung, um der dortigen Basisstation zu signalisieren, ob das jeweilige Mobilfunkgerät mit dieser Basisstation in aktiven Kontakt zur Nutzdatenübertragung treten will. Ist dies der Fall, so wird von der Basisstation ein Verbindungsaufbau zu dem jeweilig anfordernden Mobilfunkgerät eingeleitet und entsprechende Funkkanäle zur Nutzdatenübertragung bereitgestellt.

Aufgrund des Anforderungssignals SS3* im zu ortenden Mobilfunkgerät UE31 hält dieses in mindestens einem Zeitrahmen vorgegebener Struktur, insbesondere nach dem UMTS-TDD-Mode, seiner Luftschnittstelle mindestens einen Mess-Zeitschlitz zum Empfang mindestens eines Meßsignals vorrätig. Mit anderen Worten heißt das, das das jeweilig zu lokalisierende Mobilfunkgerät während dieses vorreservierbaren Meßzeitschlitzes empfangsbereit geschaltet wird, um mindestens ein Meßsignal mindestens einer Basisstation in der Nachbarschaft detektieren und aufnehmen zu können. Für das Mobilfunkgerät UE31 von Figur 2 ist beispielsweise ein Teil des Zeitschlitzes SL12 im Zeitrahmen TF5 der Nummer 5 als Meß-Zeitschlitz vorreserviert, was in der Figur 3 durch Schraffierung angedeutet ist.

Mit Hilfe des Anforderungssignals SS3* wird der Basisstation BS3 in der aktuellen Aufenthalts-Funkzelle CE3 des Mobilfunkgeräts UE31 mitgeteilt, daß ein bestimmter Teilabschnitt des vorbestimmten Slots SL12 des Zeitrahmens TF5 als Meß-zeitschlitz im Mobilfunkgerät ausgewählt worden ist. Die Basisstation BS3 in der Aufenthalts-Funkzelle CE3 hält daraufhin ebenfalls für ihre Luftschnittstelle zum Mobilfunkgerät UE31 einen zeitlich entsprechenden Meßzeitschlitz ausschließlich für die Ortungsmessung auf Vorrat, d.h. sie stellt in ihrem vorgegebenen Zeitrahmenablauf denjenigen Teilabschnitt in einem entsprechenden Zeitschlitz ab, der zeitlich betrachtet im wesentlichen deckungsgleich (absolut und relativ) zum Meßzeitschlitz im Mobilfunkgerät UE31 liegt.

Selbstverständlich ist es gegebenenfalls auch möglich, daß das Anforderungssignal SS3* zuerst von dem zu lokalisierenden Mobilfunkgerät an die Basisstation BS3 in der Aufenthalts-Funkzelle CE3 übertragen wird, und daraufhin die Vorreservierung eines Teilabschnitts eines bestimmten Zeitschlitzes eines bestimmten Zeitrahmens in der Luftschnittstelle in der Basisstation BS3 eingeleitet wird. Die Bereitstellung eines vorzugsweise zeitlich korrespondierenden Meßzeitschlitzes in der Luftschnittstelle des zu lokalisierenden Mobilfunkgerätes UE31 wird dann mittels eines entsprechenden Steuersignals SS3 von der Basisstation BS3 aus eingeleitet. Dieses Steuersignal SS3 ist in der Figur 10 zusätzlich mit eingezeichnet. Die Bereitstellung des jeweiligen Meßzeitschlitzes im zu ortenden Mobilfunkgerät UE31 wird also zweckmäßigerweise von der Basisstation BS3 in der Aufenthaltsfunkzelle CE3 dieses Mobilfunkgerätes veranlaßt bzw. generiert.

Die Basisstation BS3 in der Aufenthalts-Funkzelle CE3 des zu ortenden Mobilfunkgerätes UE31 steuert nun entweder über den gegebenenfalls implementierten Festnetzteil des Funkkommunikationssystems MCS ( - der hier in den Figuren 1, 2 der Übersichtlichkeitshalber weggelassen worden ist -) oder über Funk die Basisstation wie z.B. BS1 in einer ersten benachbarten Funkzelle wie z.B. CE1 über ein Steuersignal SS1 an, um dort eine entsprechende Zeitschlitzereservierung, d.h. Vorreservierung eines zeitlich entsprechenden Meßzeitschlitzes in einem zeitlich korrespondierenden Zeitschlitz eines zeitlich korrespondierenden Zeitrahmens der Luftschnittstelle der Basisstation BS1 vornehmen zu lassen.

In analoger Weise weist die Basisstation BS3 der aktuellen Aufenthalts-Funkzelle CE3 des Mobilfunkgerätes UE31 die Basisstation BS2 in der zweiten, benachbarten Funkzelle CE2 unter zu Hilfenahme eines Steuersignals SS2 an. Dadurch wird auch in dem vorgegebenen Zeitrahmen der Luftschnittstelle der Basisstation BS2 derjenige Zeitschlitz für die nachfolgende Ortungsmessung abgestellt bzw. ausgewählt, der im wesentlichen zum selben Zeitpunkt zur Übertragung während des Zeitmultiplex-Verfahrens ansteht.

Insbesondere im TDD-Mode von UMTS sind die Basisstationen wie z.B. BS1, BS2, BS3 hinsichtlich der zeitlichen Abfolge zueinander synchronisiert. Dies hat zur Folge, das alle Stationen zum selben Startzeitpunkt mit der fortlaufenden Durchzählung und Übertragung der Zeitschlitze sowie der aufeinanderfolgenden Zeitrahmen beginnen. Beispielsweise heißt das, daß alle Basisstationen relativ zueinander betrachtet zum selben Zeitpunkt z.B. den Zeitschlitz SL12 mit der Nummer 12 im Zeitrahmen TF5 der Nummer 5 für eine Kommunikations-Verbindung über ihre jeweilige Luftschnittstelle bereithalten.

Auf diese Weise wird sowohl in der Luftschnittstelle des jeweilig zu ortenden Mobilfunkgerätes wie z.B. UE31 als auch für die Basisstation wie z.B. BS3 in dessen momentaner Aufenthalts-Funkzelle wie z.B. CE3 sowie für die Basisstationen z.B. BS1, BS2 in mindestens zwei benachbarten Funkzellen wie z.B. CE1, CE2 (, die an die Aufenthalts-Funkzelle des jeweiligen Mobilfunkgerätes angrenzen,) derselbe Zeitschlitz in der fortlaufenden Abfolge von Zeitrahmen (zeitlich absolut und relativ betrachtet) im wesentlichen zeitgleich, d.h. mit derselben zeitlichen Position bzw. Lage für die Ortungsmessung vorbehalten bzw. bereitgestellt. Allerdings wird nur ein Teilabschnitt des jeweiligen Meßzeitschlitzes für die Übertragung des jeweiligen Meßsignals verwendet. Insbesondere wird lediglich derjenige Zeitbereich mindestens eines Zeitschlitzes für die Meßsignalübertragung ausgenutzt, der ansonsten für die Übertragung von Nutzdaten und/oder Nutznachrichtensignalen vorbelegt wäre. Dadurch steht der restliche Teil des jeweiligen Meßzeitschlitzes für die Übertragung von Nutzdaten bzw. Nutznachrichtensignalen, Kanalschätzparametern, und/oder Synchronisationsparametern weiterhin zur Verfügung. Auf diese Weise sind Beeinträchtigungen der Kanalschätzparameter sowie einer darauf basierenden Kanalentzerrung während der jeweiligen Meßsignalübertragung weitgehend vermieden, d.h. die während des midemble Zeitabschnitts übertragenen Kanalparameter sowie sonstigen Symbole bleiben weitgehend von der Meßsignalübertragung unbeeinflußt, d.h. ungestört. Insbesondere im UMTS-TDD-Mode wird ein Teil oder die Gesamtheit des jeweiligen Meßsignals im ersten Datenblock wie z.B. DA1 vor der Midamblesektion wie z.B. MA und/oder im zweiten Datenblock wie z.B. DA2, der der Midamblesektion zeitlich nachgeordnet ist, in mindestens einem der aufeinanderfolgenden Zeitschlitze wie z.B. SL12 (vergleiche Figur 5) übertragen. Bei einem oder mehreren Zeitschlitzen wie z.B. SL12 in Figur 5 wird derjenige Zeitabschnitt wie z.B. DA1, der für die Übertragung von Nutzdaten-/Nutznachrichtensignalen üblicher Weise vorbelegt ist, anstelle dessen zum Senden und/oder Empfangen mindestens eines Meßsignals auf der Übertragungsstrecke zwischen dem jeweilig zu ortenden Teilnehmergerät wie z.B. UE31 von Figur 2 und mindestens einer benachbarten Basisstation wie z.B. BS1 bereitgestellt. Dabei wird der jeweilige Datenblock wie z.B. DA1 teilweise oder ganz für die Übertragung des Meßsignals abgestellt. Nach Übertragung des jeweiligen Meßsignals wird der jeweilige Datenblock des jeweilig ausgewählten Meßzeitschlitzes wieder für die Übertragung der Nutzdaten-/Nutznachrichtensignale freigegeben.

Dadurch, daß lediglich diejenige Zeitsektion bzw. derjenige Zeitabschnitt eines oder mehrerer Zeitschlitze für die Meßsignalübertragung genutzt wird, der für die Nutzdaten-/Nutznachrichten-Signalübertragung vorreserviert ist, können in der Midamblesektion wie z.B. MA des jeweiligen Meßzeitschlitzes wie z.B. SL12 von Figur 5 Kanalschätzparameter und/oder Synchronisationsparameter weiterhin fortlaufend, d.h. sukzessive in aufeinanderfolgenden Zeitschlitzen übertragen werden. Auf diese Weise sind durch die zusätzliche Ortungsmessung Beeinträchtigungen oder Störungen bei der fortlaufenden Funkkanalschätzung weitgehend vermieden.

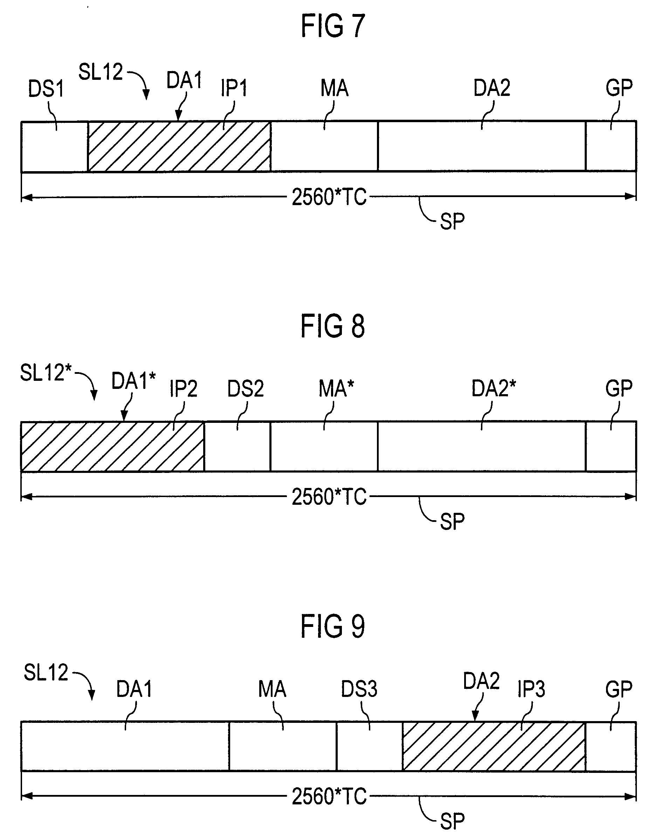

Diese lediglich zeitweise Benutzung des ersten und/oder zweiten Datenblocks DA1 bzw. DA2 (vergleiche Figuren 5, 6) eines ausgewählten Zeitschlitzes wie z.B. SL12 für die Übertragung mindestens eines Meßsignals ist in Figuren 7, 8 sowie 9 jeweils dadurch angedeutet, daß dort der jeweilige vom Meßsignal belegte Zeitabschnitt schraffiert gekennzeichnet ist. Folgende Belegungen der zeitlichen Unterteilung des jeweiligen Zeitschlitztyps entsprechend SL12 von Figur 5 bzw. SL12* von Figur 6 sind insbesondere im UMTS-TDD-Mode zweckmäßig:

Bei der zeitlichen Unterteilung entsprechend dem Zeitschlitz SL12 von Figur 5 in die vier Zeitabschnitte DA1, MA, DA2 sowie GP ist in der Figur 7 lediglich ein Teilabschnitt des ersten Datenblockes DA1 für die Meßsignalübertragung vorgesehen. Dieser Zeitabschnitt ist mit IP1 bezeichnet und schraffiert dargestellt. Selbstverständlich ist es auch möglich, nicht nur einen Teilabschnitt des ersten Datenblocks DA1, sondern dessen gesamte zeitliche Länge für die Meßsignalübertragung vorzuhalten. Da im Ausführungsbeispiel von Figur 7 lediglich ein Teilabschnitt IP1 für die Meßsignalübertragung abgestellt ist, können im verbleibenden Zeitabschnitt DS1 des Datenblocks DA1 Nutzdaten-/Nutzdatensignale DA1 übertragen werden. Dieser Zeitabschnitt DS1 ist dabei dem Zeitabschnitt IP1 für die Meßsignalübertragung vorausgestellt.

Im Unterschied dazu ist beim Zeitschlitz SL12* der für die Meßsignalübertragung abgestellte Zeitabschnitt im ersten Datenblock DA1* einem verbleibenden Zeitabschnitt DS2 für die Nutzdatenübertragung vorangestellt. Er ist mit IP2 bezeichnet und schraffiert dargestellt.

In Figur 9 ist schließlich ein Meßzeitabschnitt IP3 in den zweiten Datenblock DA2 des Zeitschlitzes SL12 von Figur 5 eingefügt. Er belegt lediglich einen Teil der zeitlichen Gesamtlänge dieses zweiten Datenblockes DA2. Er folgt zeitlich einem verbleibenden Teilabschnitt DS3 des Datenblocks DA2 für die Nutzdatenübertragung nach.

Allgemein ausgedrückt wird also derjenige Zeitabschnitt mindestens eines Zeitschlitzes, der ursprünglich für die Nutzdaten-/Nutznachrichtensignalübertragung vorgesehen ist, anstelledessen teilweise oder ganz für die Übertragung mindestens eines Meßsignals vorbelegt. Demgegenüber stehen die übrigen Sektionen, insbesondere der Midamble-Zeitabschnitt wie z.B. MA zwischen dem ersten Datenblock wie z.B. DA1 und den zweiten Datenblock DA2 weiterhin weitgehend komplett zur Verfügung und werden nicht durch die Meßsignalübertragung in unzulässiger Weise beeinträchtigt oder gestört.

Zur Ortungsmessung des Mobilfunkgerätes UE31 senden nun die erste, der Aufenthalts-Funkzelle CE3 benachbarte Basisstation BS1 und die zweite, der Aufenthalts-Funkzelle CE3 benachbarte Basisstation BS2 im selben, vorab festgelegten Meßzeitschlitz wie z.B. hier IP1 im Zeitschlitz SL12 jeweils ein Meßsignal LCS1, LCS2 über ihre jeweilige Luftschnittstelle ab (vergleiche auch das Signalisierungschema von Figur 10). Diese Meßsignale werden im weiteren als LCS-Signale (LCS = location signal) bezeichnet. Währendessen ist die Basisstation BS3 der Aufenthalts-Funkzelle CE3 des zu ortenden Mobilfunkgerätes UE31 während des zeitlich korrespondierenden Meßzeitschlitzes im zeitlich korrespondierenden ablaufenden Zeitrahmen ihrer Luftschnittstelle zweckmäßigerweise in einen sogenannten "Idle Modus" gebracht. Dies bedeutet, daß sie während des Meßzeitschlitzes in der Luftschnittstelle, die im wesentlichen dieselbe zeitliche Positionen von Meßzeitschlitzen innerhalb der vorgegebenen, fortlaufenden Zeitschlitzabfolge wie die benachbarten Basisstationen BS1, BS2 zum Senden der Meßsignale LCS1, LCS2 aufweist, sämtliche abgehenden Übertragungen stoppt, d.h. einem Totzeitabschnitt einfügt. Insbesondere werden nur derjenige Teil des jeweilig ausgebildeten Meßzeitschlitzes der mindestens zwei benachbarten Basisstationen und/oder der eigenen Basisstation der Aufenthaltsfunkzelle zum Senden und/oder Empfangen mindestens eines Meßsignals zeitweilig belegt, während dem ansonsten Nutzdaten-/Nutznachrichtensignale übertragen würden. Dies ist bei der Zeitschlitzstruktur nach dem UMTS-TDD-Mode der sogenannte erste sowie zweite Datenblock wie z.B. DA1, DA1* bzw. DA2, DA2* in den Figuren 5 bzw. 6. Der jeweilige Meßzeitabschnitt wird dabei vorzugsweise zum selben Zeitpunkt in den jeweils ausgewählten Datenblock wie z.B. DA1 bei der Basisstation BS3 der Aufenthalts-Funkzelle CE3, mindestens zwei benachbarten Basisstationen wie z.B. BS1, BS2 sowie dem zuordneten Mobilfunkgerät wie z.B. UE31 selbst eingefügt. Die Meßzeitabschnitt bei den beiden benachbarten Basisstationen BS1, BS2 zum Absenden der Meßsignale, der Meßzeitabschnitt zur Übertragungsunterbrechung bei der eigenen Basisstation BS3 in der Aufenthaltsfunkzelle, sowie der Meßzeitabschnitt im zu ortenden Mobilfunkgerät UE31 sind also vorzugsweise zueinander synchronisiert. Während dieses vorab festgelegten Meßzeitabschnittes in einem ausgewählten Datenblock wie z.B. DA1 in Figur 7 ist die Basisstation DS3 der momentanen Aufenthalts-Funkzelle CE3 im sogenannten idle Modus stummgeschaltet. Das zu lokalisierende Funkgerät UE31 empfängt dann während des vorab ausgewählten Meßzeitschlitzes IP1 bzw. IP2 innerhalb eines Datenblockes wie z.B. DA1 bzw. DA1* des jeweilig vorbestimmten Zeitschlitzes wie z.B. SL12 bzw. SL12*, das im wesentlichen dieselbe relative und absolute zeitliche Lage wie die Meßzeitfenster der benachbarten sendenden Basisstationen BS1, BS2 aufweist, lediglich deren Meßsignale LCS1, LCS2. Da sich während dieses festgelegten Meßzeitfensters wie z.B. IP1 bzw. IP2 die Basisstation BS3 der Aufenthalts-Funkzelle in einer idle-Periode, d.h. in einer Ruhepause befindet, in der sie die Übertragung von Nutzdaten-/Nutznachrichtensignalen zu den zugeordneten Mobilfunkgeräten unterbricht, sind die beiden Meßsignale LCS1, LCS2 der benachbarten Basisstationen BS1, BS2 in den angrenzenden Funkzellen CE1, CE2 vom jeweilig zu ortenden Mobilfunkgerät wie z.B. UE31 in der momentanen Aufenthalts-Funkzelle CE3 ausreichend detektierbar.

Würde hingegen während des Meßzeitabschnittes IP1 bzw. IP2 des jeweilig festgelegten Zeitschlitzes wie z.B. SL12 bzw. SL12* die Basisstation BS3 uneingeschränkt Signale senden bzw. übertragen, so würde üblicherweise ihr Sendesignal mit erheblich größerer Leistung als die Meßsignale LCS1, LCS2 der benachbarten Basisstationen BS1, BS2 vom Mobilfunkgerät gemessen werden. Denn die Basisstation BS3 der Aufenthalts-Funkzelle CE3 weist zum zu ortenden Mobilfunkgerät UE31 eine kürzere Distanz bzw. Entfernung als die benachbarten Basisstationen BS1, BS2 auf, die den der momentanen Aufenthalts-Funkzelle CE3 angrenzenden Funkzellen CE1, CE2 zugeordnet sind. Damit wäre ein Meßsignal, daß von der eigenen Basisstation abgesendet wird, in der aufgenommenen Überlagerung von ankommenden Signalen beim Mobilfunkgerät dominanter gegenüber den ankommenden Signalen, die von den benachbarten Basisstationen herrühren. Dieses Phänomen wird in der einschlägigen Literatur wie z.B. "CDMA für for wireless personal Communications" R.Prasad: artech house publishers, London-Boston; ISBN 0-89006-571-3; 1996 mit "near-far-effect" bezeichnet. Dieser führt dazu, daß das jeweilig zu lokalisierende Mobilfunkgerät wie z.B. UE31 nur die Signale der eigenen Basisstation wie z.B. BS3 in seiner aktuellen Aufenthalts-Funkzelle wie z.B. CE3 detektieren könnte und Signale anderer, weiter entfernt liegender Basisstationen in angrenzenden Funkzellen wie z.B. CE1, CE2 nicht hören würde, da diese hinsichtlich ihrer Signalleistunge zu schwach wären und gegebenenfalls im Rauschen der ankommenden überlagerten Signale untergehen würden.

Da die beiden benachbarten Basisstationen BS1, BS2 in räumlicher Entfernung zum zu ortenden Mobilfunkgeräte UE31 liegen, treffen ihre Meßsignale LCS1, LCS2 aufgrund ihres jeweilig zurückgelegten Laufwegs jeweils mit einer zeitlichen Verzögerung beim Mobilfunkgerät MP1 gegenüber dem dort intern vorliegenden, festgelegten Zeitschlitzraster ein. In der Figur 2 weist beispielsweise die Basisstation BS1 eine Distanz DI11, und die Basisstation BS2 eine Distanz DI21 zum zu ortenden Mobilfunkgerät UE31 auf. Die Zeitverschiebung Δt1* des jeweiligen Meßsignals wie z.B. LCS1 gegenüber dem Zeitschlitzraster im Mobilfunkgerät UE31 veranschaulicht schematisch die Figur 4. Entlang der Abszisse ist die Zeit t aufgetragen. Die Startzeitpunkte für die Zeitschlitze bzw. Slots SL11, SL12,.SL13 usw. des für die Ortungsmessung ausgewählten Zeitrahmens TF5 in der Luftschnittstelle in dem Mobilfunkgeräts UE31 sind mit den zugehörigen Bezugszeichen t11, t12, t13 usw. gekennzeichnet. Dabei ist jeder Zeitschlitz entsprechend der zeitlichen Aufteilung der Zeitschlitzstrukuren von Figur 5 bzw. 6 aufgeteilt, d.h. allgemein betrachtet weist der jeweilige Zeitschlitz als ersten Übertragungsblock einen Datenblock wie z.B. DA1 auf, dem ein Midambleblock zur Übertragung von Kanalparametern folgt. Dem Midambleblock wie z.B. MA ist ein zweiter Datenblock wie z.B. DA2 nachgeordnet. Am Ende des jeweiligen Zeitschlitzes ist schließlich eine sogenannte guard period wie z.B. GP als Totzeit reserviert, um eine zeitliche Entkopplung aufeinanderfolgender Zeitschlitze zu erreichen.

Da das Meßsignal LCS1 die Distanz bzw. Strecke DI11 von seiner absendenden Basisstation BS1 bis zum Mobilfunkgerät UE31 mit einer gegebenen, vorzugsweise etwa konstanten Ausbreitungsgeschwindigkeit v durchläuft, kommt es gegenüber seinem absoluten Startzeitpunkt tIP1 innerhalb der Zeitdauer des ersten Datenblocks DA1 des Zeitschlitzes SL12 seiner Basisstation BS1 mit einer Zeitverzögerung Δt1* erst zum Zeitpunkt tLCS1* ( = Eintreffzeitpunkt des Meßsignals LCS1) beim Mobilfunkgerät UE31 an. Es gilt also insbesondere die Beziehung tLCS1* = tIP1 + Δt1*. Der Zeitpunkt des Beginns des Midamblesblockes MA ist in der Figur 4 mit tMA bezeichnet. Der Startzeitpunkt des zweiten Datenblockes DA2 des Zeitschlitzes SL12 ist in der Figur 4 mit tDA2 angegeben. Die guard period GP beginnt zum Zeitpunkt tGP. Der erste Datenblock DA1 des Zeitschlitzes SL12 fängt zum Zeitpunkt t12 = tDA1 an.

Da insbesondere im TDD-Mode des UMTS-Standards die Basisstationen bezüglich des Zeitrahmenstruktur, der Abfolge der einzelnen Zeitschlitze und deren interner Blockstruktur zweckmäßigerweise zueinander synchronisiert sind (d.h. alle Basisstationen beginnen zur gleichen Zeit mit der Übertragung des Zeitschlitze SL11, SL12 ... usw. bis SL25) und der maximale Funkzellenradius vorzugsweise bei ca. 10 Km gewählt ist (d.h. das jeweilige LCS-Signal benötigt für die Strecke von einer Basisstation zur benachbarten Basisstation 66,7 µsec.) folgt, das das Mobilfunkgerät UE31 innerhalb eines Slots bzw. Zeitschlitzes (z.B. Zeitschlitzdauer SP = 666,7 µsec) das jeweilige LCS-Signal wie z.B. LCS1, LCS2 der anderen Basisstationen wie z.B. BS1, BS2 weitgehend einwandfrei detektieren kann. Denn nur ein kleiner Teil des von der benachbarten Basisstation BS1 gesendeten LCS-Signals wie z.B. LCS1 rutscht in den für die Kanalschätzung vorgesehenen Midambleblock MA des ausgewählten Zeitschlitzes SL12. Vorteilhaft ist es insbesondere, den Startzeitpunkt für die Übertragung des jeweiligen Meßsignals an den Anfang des ersten Datenblockes wie z.B. DA1 des jeweilig ausgewählten Zeitschlitzes zu legen.

Auf diese Weise bleibt ein ausreichend langer Zeitabschnitt tMA-tIP1 des ankommenden Meßsignals wie z.B. LCS1 dem jeweilig vorgegebenen Meßzeitfenster IP1 zur Detektion zugeordnet. tIP1 bezeichnet dabei das Ende der Meßsignalübertragung. Dies ist derjenige Zeitabschnitt, der ansonsten für die Übertragung von Nutzdaten bzw. Nutzsignalen bereitgehalten wird, jetzt aber für die Übertragung des Meßsignals abgestellt ist.

Das Mobilfunkgerät UE31 wird hinsichtlich seines Zeitschlitzrasters zweckmäßigerweise mit der Basisstation BS3 synchronisiert, in deren Funkzelle CE3 es sich momentan aufhält. Dies bedeutet aber, das das interne timing (von slots und frames) des Mobilfunkgerätes UE31 aufgrund dessen Distanz bzw. Entfernung DI1 zur eigenen Basisstation DS3 zeitverschoben gegenüber deren timing, d.h. deren Zeitschlitzraster ist. Die Zeitverschiebung entspricht dabei der Entfernung des Mobilfunkgerätes UE31 von der Basisstation BS3. Anders betrachtet entspricht somit der Startzeitpunkt tIP1 des Meßzeitschlitzes wie z.B. IP1 im Mobilfunkgerät dem Eintreffzeitpunkt eines gedachten, fiktiven Sendesignals wie z.B. Synchronisationssignals von der eigenen, in der aktuellen Aufenthalts-Funkzelle zugeordneten Basisstation BS3. Damit gibt die Zeitdifferenz Δt1* = tLCS1* - tIP1 in Figur 4 die Zeitverschiebung zwischen dem Eintreffzeitpunkt tLCS1* des Meßsignals LCS1 (von der Basisstation BS1 kommend) und dem Eintreffzeitpunkt tIP1 eines lediglich fiktiven, gedachten Meßsignals LCS1* (von der Basisstation BS3 kommend) beim zuortenden Mobilfunkgerät UE31 an. Dabei sind sowohl das Meßsignal LCS1 als auch das gedachte Meßsignal LCS1* zum festgelegten Startzeitpunkt tIP1 innerhalb des ersten Datenblocks DA1 des jeweilig ausgewählten Meßzeitschlitzes abgesendet worden. Die Zeitdifferenz Δt1* entspricht dabei einer konstanten Laufwegdifferenz Δx1* = v Δt1* zwischen dem Meßsignal LCS1 und dem fiktiven Meßsignal LCS1*, wobei v die Ausbreitungsgeschwindigkeit der Funksignale ist.

Zusammenfassend betrachtet wird vom Mobilfunkgerät UE31 im festgelegten Slot SL12 des festgelegten Zeitrahmens TF5 seines internen Zeitschlitzrasters ein LCS1-Signal der Basisstation BS1 zum Zeitpunkt tLCS1* empfangen, der zeitlich später als der Startzeitpunkt tIP1, d.h. der Startzeitpunkt des vorgegebenen Meßzeitabschnitts innerhalb des ersten Datenblocks DA1 liegt, so daß eine Zeitdifferenz Δt1* resultiert. Die Zeitdifferenz Δt1* wird dabei als Auswertesignal OTD1 (vergleiche Figur 10) an die Basisstation BS3 gesendet, die das Mobilfunkgerät UE31 aktuell bedient. Auf die gleiche Weise wird vorzugsweise innerhalb desselben Meßzeitabschnittes desselben Zeitschlitzes SL12 im selben frame TF5 die Zeitdifferenz Δt2* des LCS2 Meßsignals der zweiten, benachbarten Basisstation BS2 zwischen dem Empfangszeitpunkt tLCS2* im Mobilfunkgerät UE31 und dem Startzeitpunkt tIP1 bestimmt und ebenfalls der Station BS3 in der Aufenthalts- Funkzelle CE3 als Auswertesignal OTD2 (vergleiche Figur 10) mitgeteilt. Die vom Mobilfunkgerät ermittelte Zeitdifferenzen Δt1*, Δt2* werden beispielsweise über einen aktivierten, d.h. bereits bestehenden Kommunikationskanal der Basisstation BS3 übermittelt.

Mit Hilfe dieser beiden ermittelten Zeitdifferenzen Δt1*, Δt1* sowie mit den bekannte Ortspositionen und der Basisstationen BS1, BS3 kann nun die Basisstation BS3 mittels einer zugeordneten Rechen-/Auswerteeinheit zwei Hyperbelgleichungen und die beiden möglichen Schnittpunkte der Hyperbeläste dieser Hyperbeln als Ortsangaben für das zu ortende Mobilfunkgerät ermitteln. Denn mit Hilfe der geographischen Daten der Basisstation BS1, BS2, BS3 können den ermittelten Zeitdifferenzen Δt1*, Δt2* geographische Orte zugewiesen werden. Beispielsweise läßt sich der ermittelten Zeitdifferenz Δt1* durch Umrechnung mit Hilfe der Ausbreitungsgeschwindigkeit v des Meßsignals LCS1 derjenige geographische Ort Δx1* = v Δt1* zuordnen, der von der Basisstation BS1 und der Basisstation BS3 in der Aufenthalts-Funkzelle CE3 des Mobilfunkgeräts UE31 eine konstante Entfernungsdifferenz Δx1* hat. Dabei ist diejenige Menge aller Hyperbeln, für die die Differenz der Abstände von zwei gegebenen, festen Ortspunkten-hier den Ortspunkten der beiden Basisstationen BS1, BS3-konstant ist, in vorteilhafter Weise durch eine Hyperbelfunktion beschreibbar. Die beiden Hyperbelfunktionen lassen sich konkret mit einer Methode ermitteln, die insbesondere für den UMTS-FDD-Mode in der spezifikation 3G TS 25.3055 "stage 2 functional specification of location services in UTRAN", Version 3.1.0 (2000-03) angegeben ist. In der Figur 2 ist jeweils ein Hyperbelast HY11, HY21 der ermittelbaren Hyperbelfunktionen eingezeichnet. Sie schneiden sich in der Aufenthalts-Funkzelle CE3. Es wird also im vorliegenden Ausführungsbeispiel davon ausgegangen, das die Schnittpunkte der ermittelten Hyperbelfunktionen jeweils in getrennten Funkzellen voneinander liegen. Dadurch ist die Position des Mobilfunkgeräts UE31 eindeutig bestimmbar. Diese Position wird dem Mobilfunkgerät UE31 anschließend über z.B. eine bestehende, aktive Kommunikationsverbindung von der Rechen-/Auswerteeinrichtung der Basisstation BS3 übermittelt.

Im Fall, das die beiden Schnittpunkte der Hyperbeln in derselben Funkzelle liegen, sind für eine eindeutige Ortsbestimmung des Mobilfunkgeräts weitere Informationen über die Ortslage des Mobilfunkgerätes erforderlich. Dazu könnte zum einen die Zeitdifferenz Δt3* eines weiteren Meßsignals LCS3 einer weiteren, der Übersichtlichkeit halber in Figur 2 nicht eingezeichneten, vierten Basisstation bestimmt werden. Als Schnittmenge von drei Hyperbeln ergibt sich dann ein einzelner, gemeinsamer Schnittpunkt in eindeutiger Weise. Dieser gibt dann die eindeutige Ortsposition des Mobilfunkgeräts UE31 an.

Gegebenenfalls kann es zweckmäßig sein, die Übertragung der Meßsignale wie z.B. LCS1, LCS2 der mindestens zwei angrenzenden Basisstationen wie z.B. BS1, BS2 während der Datenblöcke der unterschiedlichen Zeitschlitze vorzunehmen. Dadurch ist eine einfache Selektion bzw. Separierung der verschiedenen Meßsignale beim Empfang im zu ortenden Mobilfunkgerät möglich. Insbesondere ist durch die Vorgabe einer zeitlichen Sendeabfolge der Meßsignale deren eindeutige Identifizierung und Zuordnung beim Empfang im Mobilfunkgerät möglich, wenn diese zeitliche Sendecodierung z.B. durch die kontrollierende Basisstation BS3 mitgeteilt wird. Insbesondere können die Meßsignale in den Datenblock-Sektionen mindestens eines Zeitschlitzes aufeinanderfolgender, verschiedener Zeitrahmen (frames) übertragen werden. Dadurch wird für den Empfang des jeweiligen Meßsignals pro Zeitrahmen nur ein einziger Datenblock teilweie oder ganz im jeweiligen Meßzeitschlitz aus der vorgegebenen Anzahl von Zeitschlitzen pro Zeitrahmen belegt, was pro Zeitrahmen Kanalkapazitätseffizient ist. Störungen bei der eigentlichen Datenübertragung lassen sich insbesondere durch die Verteilung mindestens eines Meßsignals auf die Datenblöcke mehrerer Meßfenster gegenüber der Übertragung des Meßsignals in einem oder mehrere Datenblöcken eines einzigen Zeitfensters verringeren.

Gegebenenfalls kann es für eine erste, annäherungsweisen Angabe der Ortsposition des jeweiligen Mobilfunkgerätes bereits ausreichend sein, lediglich die Laufzeitdifferenz wie z.B. Δt1* für ein einziges Meßsignal wie z.B. LCS1 von einer einzigen, benachbarten Basisstation wie z.B. BS1 zu ermitteln. Damit läßt sich zumindest angeben, daß das Mobilfunkgerät eine Ortsposition einnimmt, die sich an irgendeiner Stelle der beiden Äste der ermittelten Hyperbelfunktionen befindet.

Oftmals ist eine Mobilfunkzelle aus funkttechnischen Gründen zweckmäßigerweise sektorisiert. Sie kann beispielsweise in drei etwa 120° große disjunktive Raumbereiche, den sogenannten Sektoren aufgeteilt sein. Dazu existieren vorzugsweise drei Antennen, welche etwa im 120° Abstand aufgestellt sind und solche Richtcharakteristiken aufweisen, das sie nur in den ihnen zugeordneten Raumsektoren abstrahlen und empfangen können. Da der Basisstation wie z.B. BS3 bekannt ist, in welchem Sektor sich das Mobilfunkgerät UE31 befindet, kann die Mehrdeutigkeit der Positionsbestimmung mit nur zwei Zeitdifferenzmessungen aufgelöst werden. Denn die beiden möglichen Schnittpunkte der beiden ermittelbaren Ortshyperbeln befinden sich im Normalfall nicht im gleichen Sektor. Der Sektor ist der Basisstation in vorteilhafter Weise deshalb bekannt, da durch die Richtcharakteristik der Antennen die Signale, die jede Mobilfunkstation sendet, nur von einer der drei Antennen empfangen wird. Beim Übertragen von Signalen zu jedem Mobilfunkgerät werden die Signale vorzugsweise nur zu derjenigen Antenne geleitet, in deren Raumbereich sich das jeweilige Mobilfunkgerät aufhält. Damit ist der Basisstation BS3 der Aufenthalts-Funkzelle CE3 im groben derjenige Sektor bekannt, wo sich in etwa das jeweilig zu ortende Mobilfunkgerät wie z.B. UE31 aufhält.

Zusätzlich oder unabhängig von der Bestimmung des Aufenthaltsortes des Mobilfunkgerätes UE31 mit Hilfe der Rechen/Auswerteeinheit der Basisstation BS3 in der Aufenthaltspunktzelle CE1 kann es gegebenenfalls auch zweckmäßig sein, die Positionsbestimmung im Mobilfunkgerät UE31 selbst vorzunehmen. Dazu werden die Daten der Positionen der Basisstationen BS1 mit BS3 dem Mobilfunkgerät UE31 zweckmäßigerweise übermittelt. Dies kann entweder auf Anforderung des Mobilfunkgerätes UE31 durch ein besonderes Signalisierungssignal geschehen oder generell bei Betreten einer Funkzelle oder durch Verteilen dieser Informationen über den sogenannten broadcast channel BCH erfolgen. Generell dient der broadcast channel BCH - insbesondere im UMTS-TDD-Mode - zum Übermitteln von sogenannten zellspezifischen Informationen. Der broadcast channel ist dabei als sogenannter common-channel ausgebildet, der von allen Mobilfunkgeräten, die sich in der jeweiligen Funkzelle befinden, ständig gehört wird. Insbesondere dient der broadcast channel zum Übermitteln von sogenannten zellspezifischen Informationen wie z.B. Benutzer Identifikationen, cell-ID's usw. In einer Erweiterung seiner Funktion können in vorteilhafter Weise zu den zellspezifischen Informationen gegebenenfalls auch die geographischen Koordinaten der eigenen Basisstation, als auch die der umliegenden Basisstationen übermittelt werden. Mit Hilfe dieser Informationen und durch die Zeitdifferenzmessungen kann das Mobilfunkgerät seine eigene Position nach den gleichen, weiter oben beschriebenen Prinzipien bestimmen, wie dies zur Rechen-/Auswerteeinrichtung der Basisstation BS3 erläutert worden ist.

Darüberhinaus kann es gegebenenfalls zweckmäßig sein, daß es dem jeweiligen Mobilfunkgerät ermöglicht wird, im sogenannten idle Mode eine Positionsbestimmung vornehmen zu können. Im idle Mode eines Mobilfunkgerätes besteht keine aktive Kommunikationsverbindung zur Nachrichtensignalübertragung in der Aufenthalts-Funkzelle. Generell betrachtet kann sich ein Mobilfunkgerät in mehreren Modi befinden. Eine davon ist als idle-Mode bekannt. In dieser ist das Mobilfunkgerät eingeschaltet, es besteht aber keine aktive Verbindung zur Basisstation. Dies ist beispielsweise dann der Fall, wenn der Benutzer des Mobilfunkgerätes auf einen Anruf wartet. Über mindestens einen, insbesondere mehrere sogenannte common channels können Daten zwischen Mobilfunkgerät und Basisstation der Aufenthalts-Funkzelle ausgetauscht werden, ohne daß eine aktive Verbindung wie z.B. AC13 bestehen muß. Diese Commonchannels werden üblicherweise benutzt, um eine aktive Verbindung aufzubauen. In der Downlink-Richtung existiert der sogenannte forward-access-channel FACH. Diesen empfangen alle eingeschalteten Mobilfunkgeräte und versuchen, darin Informationen zu finden, die speziell an sie adressiert sind. Alle anderen Informationen werden üblicherweise ignoriert. Somit kann die Basisstation der jeweiligen Aufenthaltszfunkzelle Daten zu einem bestimmten, eingeschalteten Mobilfunkgerät in ihrer Versorgungs-Funkzelle übertragen, zu dem eine aktive Verbindung besteht. Dies wird z.B. verwendet um einem bestimmten Mobilfunkgerät mitzuteilen, das ein ankommender Anruf vorliegt. Umgekehrt existiert ein sogenannter random-access-channel RACH als common-channel in der Aufwärtsrichtung (uplink), damit das jeweilige Mobilfunkgerät Daten bzw. Nachrichten an die Basisstation seiner Aufenthalts-Funkzelle übertragen kann, falls keine Aktivverbindung besteht. Damit kann das Mobilfunkgerät unter anderem der Basisstation in seiner Aufenthaltsfunkzelle mitteilen, daß der Nutzer jemanden anrufen möchte. Diese beiden standardisierten Kanäle RACH, FACH können nun insbesondere auch in folgender Weise benutzt werden:

In einem 1. Fall erfolgt die Berechnung der Ortsposition z.B. des Mobilfunkgerätes UE31 von Figur 2 mit Hilfe der Rechen/Auswerteeinrichtung der Basisstation BS3 in der Funkzelle CE3. Falls die Anfragen nach der Positionsbestimmung durch das Mobilfunkgerät UE31 selbst erfolgt, mißt dieses zuerst die Zeitdifferenzen Δt1*, Δt2* der Meßsignale LCS1, LCS2 der benachbarten Basisstationen BS1, BS2. Diese Laufzeitdifferenzen übermittelt das Mobilfunkgerät UE31 zusammen mit der Anfrage nach der Position über den RACH an die Basisstation BS3 in die Aufenthalts-Funkzelle CE3. Nach erfolgter Errechnung der Position in der entsprechenden Funktionseinheit des Funkkommunikationssystems wird die aktuelle, ermittelte bzw. errechnete Position über den FACH an das Mobilfunkgerät UE31 übertragen.

Falls die Anfrage nach der Positionsbestimmung des Mobilfunkgerätes von der Netzwerkseite erfolgt, erhält die Mobilfunkstation UE31 über den FACH die Aufforderung, von der Basisstation BS3 in der Auefnthalts-Funkzelle CE3 die benötigten Zeitdifferenzen zu ermitteln. Diese werden dann über den RACH an die Basisstation BS3 übermittelt und stehen dann dort deren Rechen-/Auswerteeinheit zur Positionsbestimmung zur Verfügung.

In einem zweiten Fall folgt die Berechnung der Ortsposition im Mobilfunkgerät UE31 in vorteilhafter Weise selber. Sind die Positionen der umliegenden Basisstationen BS1, BS2 dem Mobilfunkgerät UE31 bereits bekannt, wie z.B. über den broadcast-channel BCH, ist es nicht erforderlich, eine aktive Verbindung zur Basisstation BS3 der Aufenthaltsfunkzelle aufzubauen. Andernfalls sendet die Mobilfunkstation UE31 über den RACH eine Anfrage an die Basisstation BS3 nach den geographischen Daten umliegender Basisstationen wie z.B. BS1, BS2. Diese Daten werden dann über den FACH an das Mobilfunkgerät UE31 übermittelt.

Als weitere Variante kann der Datenaustausch im Idle-Mode des Mobilfunkgerätes auch so durchgeführt werden, daß für diesen Zweck eine aktive Verbindung in Form von sogenannten dedicated channels aufgebaut wird.

Als sogenanntes LCS - Signal kann insbesondere entweder ein schon vorhandenes Signal des UMTS-TDD-Mode Systems verwendet werden, wie z.B. SCH ( = sychronisation channel) oder BCH oder es kann ein ähnlich dem CPICH (= common pilot channel) beim FDD-Mode neues Signal beim TDD-Mode eingeführt werden. Denkbar wäre z.B. ein Signal, das über eine Teillänge oder die Gesamtlänge mindestens eines Datenblock-Zeitabschnitts eines herausgegriffenen Slots eine vordefinierte Symbolfolge mit einer konstanten Leistung gesendet wird.

Zweckmäßig ist es insbesondere, daß sich die Häufigkeit der bereitgestellten Meßzeitabschnitte zum Senden und Empfangen von zusätzlichen Meßsignalen danach richtet, wie oft eine Positionsbestimmung des jeweiligen Mobilfunkgerätes überhaupt nötig ist. Dies wird zweckmäßigerweise über eine geeignete Signalisierung den benachbarten Basisstationen mitgeteilt. Dies teilen entsprechenden Informationen den Mobilfunkgeräten entweder permanent oder bei Bedarf mit.

Weiterhin ist es gegebenenfalls auch möglich, daß das Auftreten von idle- datablöcken in der eigenen Funkzelle und von LCS-Signalen aus den benachbarten Funkzellen kommend mit Hilfe der Netzinfrastruktur so koordiniert wird, das beide nur dann eingefügt bzw. gesendet werden, wenn es zu einer Anfrage nach einer Positionsbestimmung z.B. von einer spezifischen Anwendung her kommt.

Weiterhin kann das Funkkommunikationssystem so realisiert werden, das das jeweilige LCS-Signal nicht in jedem frame und nicht mit den Datenblöcken jedes Zeitschlitzes, sondern weniger häufiger übertragen wird. Die Eigenschaften eines solchen LCS-Signals werden zweckmäßig derart gewählt, das zum einen eine eindeutige Identifikation der aussendenden Basisstation möglich ist; des weiteren ist es zweckmäßig, daß das LCS-Signal ausreichend lang ist, um es mit einer hohen Wahrscheinlichkeit detektieren zu können. Eine ausreichende Länge ist aber gerade durch das Einfügen in die Datenblöcke sichergestellt, da diese wesentlich länger als der midamle-Zeitabschnitt sind.

Zusammenfassend betrachtet wird also zur erfindungsgemäßen Positionsbestimmung des jeweilig zu ortenden Teilnehmergeräts während der Teillänge oder der Gesamtlänge mindestens eines Datenblock-Zeitabschnitts mindestens eines vorgegebenen Zeitschlitzes in mindestens einem Zeitrahmen anstelle von Nutzdaten bzw. Nutznachrichtensignalen mindestens ein Meßsignal übertragen. Es wird dazu mindestens ein Datenblock-Zeitabschnitt der vorgegebenen Slot- und Rahmenstruktur insbesondere im TDD-Mode eines UMTS-Mobilfunksystems in ein sogenanntes Idle-Meßzeitfenster umfunktioniert. In diesem kann dann mindestens ein Meßsignal gesendet und empfangen werden. Dabei wird während des mindestens einen idle- Meßzeitfensters, das von mindestens einem Zeitschlitz während mindestens einen Datenblock-Übertragungszeitabschnitts abgestellt ist, von zumindestens zwei Basisstationen, die der Aufenthaltsfunkzelle des jeweils zu lokalisierenden Teilnehmergerätes benachbart sind, jeweils mindestens ein Meßsignal gesendet. Währendessen ist im zeitlich korrespondierend positionierten idle-Meßzeitfenster der eigenen Basisstation in der Aufenthaltsfunkzelle eine Ruhephase, d.h. Pause eingefügt. Damit ist es möglich, in den für die Meßsignalübertragung reservierten idle-Meßzeitfenstern der eigenen, das Teilnehmergerät bedienenden Basisstation Signale von Basisstationen in Nachbarfunkzellen zu detektieren. Denn während dieser idle-Phase der eigenen Basisstation weist diese eine Übertragungspause auf. Dadurch ist die Gefahr vermieden, daß die Meßsignale im leistungsmäßig betrachtet stärkeren Funksignale der eigenen Basisstationen untergehen.

Durch die zeitweise Umfunktionierung des Teilabschnitts oder der Gesamtlänge mindestens eines Datenblocks mindestens eines Zeitschlitzes kann auf einfache und zuverlässige Weise die jeweilige Position des jeweilig zu ortenden Teilnehmergeräts bestimmt werden. Zusätzliche Komponenten wie z.B. die eines GPS-Systems, sind nicht erforderlich. Weiterhin sind also aufwendige Modifikationen in der bestehenden Signalisierung des Funkkommunikationssystems vermieden. Ein weiterer Vorteil ist der Synergie-Effekt mit dem sogenannte FDD-Mode im UMTS-Standard. Denn das Protokoll für das Signalisierung, für die Anforderung der Positionsbestimmung, für die Übermittlung der Ergebnisse sowie für die Errechnung der Position bleiben im wesentlichen gleich.

Weiterhin kann das erfindungsgemäße Meßprinzip in vorteilhafter Weise auch bei anderen Funkkommunikationssystemen verwendet werden, bei denen Daten bzw. Nachrichtensignale auf zeitlich aufeinanderfolgende Zeitschlitze und deren vorgegebene Struktur aufgeteilt werden.

Durch das erfindungsgemäße Meßverfahren werden die Nutzdaten bzw. Nutzsignale des jeweiligen, verwendeten idle data block - Abschnitts nicht gesendet; sie werden sozusagen idle geschaltet, das heißt nicht übertragen. Durch diese Maßnahme entsteht eine Ruhephase in der Übertragung der eigenen Basisstation zu den Teilnehmergeräten in der momentanen Aufenthalts-Funkzelle. Dies kann von den Teilnehmergeräten ausgenutzt werden, um in diesen Ruhephasen Meßsignale anderer Basisstationen in benachbarter Funkzellen zu detektieren. Diese Meßsignale sind zweckmäßigerweise derart ausgebildet, daß das jeweilige Teilnehmergerät die Basisstationen, von der die Meßsignale kommen, eindeutig identifizieren kann. Auf diese Weise ist es dem jeweilig zu ortenden Teilnehmergerät möglich, ihre Meßsignalmessungen den umliegenden, benachbarten Basisstationen zuzuordnen. Solch ein Signal könnte beispielsweise der PSC ( = primary synchronisation code) sein. Dieser ist überlicherweise jedem Teilnehmergerät in den Zellen bekannt und wird auf Grund seiner Eindeutigkeit nur dadurch unterschieden, von welcher Basisstation er gesendet wurde, indem er mit einem gewissen zeitlichen Versatz (offset) versehen wird.

Mit diesen Informationen lassen sich nach der OTDOA-Methode (observed time difference of arrival-idle period downlink) Meßsignallaufzeiten ermitteln, die an die sogenannte PCF ( = position calculation function) der bedienenden Basisstation übertragen werden. Dort wird die Position des jeweilig zu ortenden Teilnehmergeräts aufgrund der Berechnung von Hyperbeln ermöglicht.

Zusammenfassend betrachtet werden also sogenannte idle-Meßzeitfenster vorzugsweise im downlink des TDD-Modes eines UMTS-Mobilfunksystems eingeführt, um während dieser Meßzeitfenster Meßsignale senden und empfangen zu können. In regelmäßigen und unregelmäßigen zeitlichen Abständen wird die Übertragung im Datenteil (DATA SYMBOLS) bestimmter bursts für eine bestimmte Zeit ausgeschaltet. Damit ist es möglich, in den idle periods (Übertragungspausen) der das jeweilige Teilnehmergerät bedienenden Basisstation (NodeB) Signale von Basisstationen der Nachbarzellen zu detektieren, um die Position des jeweiligen Teilnehmergeräts zu bestimmen. Das Einbringen der idle periods erfolgt in einer der beiden oder beiden Data symbols-bursts. Die Vorteile der Verwendung von Teilen der Data symbols- Zeitabschnitte für die idle-Meßfenster sind insbesondere:
1. vorhandene länge von maximal 976 (oder 1104) Chips für ein idle periods, somit ausreichend Zeit für Messungen von Signalen beteiligter Basisstationen,
2.Kompensierung etwaiger Verluste von Nutzdaten (aufgrund des Einfügens von idle periods) durch eventuelle Wiederholung dieser Chips, bzw. können diese Daten durch die optional mögliche Kanalcodierung (inclusive interleaving) am Empfänger automatisch rekonstruiert werden,
3.nicht Beeinflussung der Midammble-Symbole und damit uneingeschränkte Fortsetzung der Schätzung des Mobilfunkkanals mittels der Midamble-Parameter.

Da die idle-Meßzeitfenster nicht während des Midamble-Blocks übertragen werden, sondern lediglich vorher innerhalb der ersten Datenblocks und/oder innerhalb des nachfolgenden zweiten Datenblocks, werden die Midamble-Parameter nicht in unzulässiger Weise gestört oder sonstwie beeinträchtigt. Schlechtere Bitfehlerraten aufgrund der Meßsignaleinfügung in das bestehende Zeitraster der aufeinanderfolgenden Zeitschlitze sind somit weitgehend vermieden. Denn die Midamble-Parameter zur Schätzung der Qualität des Mobilfungkanals bleiben weitgehend unbeeinflußt. Da der jeweilige Datenblock wesentlich länger als der Midamble-Sektor des jeweiligen Zeitschlitzes ist, ist es weitgehend vermieden, das sogar Meßsignale von weit entfernten Basisstationen noch innerhalb des vorgegebenen Zeitabschnitts des ausgewählten Datenblocks von der Basisstation in der Aufenthaltsfunkzelle empfangen werden können. In der Regel ist der zeitliche Versatz, mit dem das jeweilige Meßsignal (gerechnet von seinem absoluten Startzeitpunkt) beim Teilnehmergerät ankommt, noch innerhalb der zeitlichen Lage des vorgegebenen Datenblocks und rutscht noch nicht in den Midamble-Sektor. Überlagerungen, Störungen der Midamble-Parameter sind somit weitgehend vermieden.

Ein weiterer Vorteil der Erfindung ist der Verzicht auf zusätzliche Hardware- Komplexität und zusätzliche Komponenten wie zum Beispiel die Positionbestimmung mittels GPS-System. Somit ist der Faktor zusätzlicher Materialaufwand auf Kosten für eine erweiterte Softwarelösung begrenzt. Ein weiterer Vorteil ist Synergie-Effekt mit dem FFD-Mode.

Beim erfindungsgemäßen Verfahren wird eine bestimmte Anzahl von Chips in mindestens einem Datenblock eines ausgwählten Zeitfensters nicht gesendet - sie werden sozusagen idle geschaltet (vergleiche Figuren 5 mit 9). Durch diese Maßnahme besteht eine Ruhephase in der Übertragung der Basisstationen zu ihren Teilnehmergeräten in einer Mobilfunkzelle. Dies kann ausgenutzt werden von den Teilnehmergeräten, um in diese Ruhephasen Signale anderer Basisstationen in Nachbarfunkzellen zu dedektieren. Das Auftreten bzw. Einführen von solchen idle-periods wird zweckmäßigerweise auf das Vorhandensein der zu messenden Signale abgestimmt. So ist es dem jeweiligen Teilnehmergerät leichter möglich, die zu messenden und interessierenden Signale zu erkennen, sowie die Zeiten des Eintreffens der Meßssignale zu protokollieren.

Die Meßsignale sind zweckmäßigerweise derart ausgebildet, daß sie die Basisstation von der die Meßsignale kommen, eindeutig identifizieren. Auf diese Weise kann das jeweilig zu ortende Teilnehmergerät ihre Signalmessungen den umliegenden Basisstationen zuordnen. Solch ein Signal ist beispielsweise der PSC (primary synchronisation code). Sein Auftreten ist jedem Teilnehmergerät in dem Funkzellen bekannt und wird aufgrund seiner Eindeutigkeit nur dadurch unterschieden, von welcher Basisstation er gesendet wurde, indem er einen gewissen zeitlichen Versatz (offset) erhält. Mit diesen Informationen lassen sich nach der OTDOA-Methode Zeitdifferenzen in den idle periods ermitteln und oder Empfangszeitpunkte auswerten. Diese werden an die PCF (Position calculation function) in der jeweiligen Basisstation übertragen, die die Positionsberechnung für das jeweilige Teilnehmergerät möglich macht.

Eine weitere Möglichkeit zur Ortsbestimmung des jeweiligen Mobilfunkgeräts besteht darin, daß mindestens ein Meßsignal von dem jeweilig zu ortenden Mobilfunkgerät an mindestens eine Basisstation in einer benachbarten Funkzelle geschickt wird, die deren Auswertung veranlaßt. Allgemein ausgedrückt kann also das vorstehende Ortungsverfahren gegebenenfalls auch durch Umkehr der Senderichtung und Empfangsrichtung der Meßsignale durchgeführt werden. Die Basisstationen der benachbarter Funkzellen nehmen dabei die vom Mobilfunkgerät gesendeten Meßsignale auf, ermitteln deren Laufzeiten und geben diese zur weiteren Auswertung z.B. an die Basisstation der Aufenthalts-Funkzelle des Mobilfunkgerätes weiter.

## Patentansprüche

1. Verfahren zur Positionsbestimmung (PO1) mindestens eines Teilnehmergeräts (UE31) eines Funkkommunikationssystems (MCS), das eine Vielzahl von Basisstationen (BS1, BS2, BS3) in zugeordneten Funkzellen (CE1, CE2, CE3) aufweist, und in dem Funksignale (LS111) über mindestens eine vordefinierte Luftschnittstelle zwischen dem jeweiligen Teilnehmergerät (UE31) und mindestens einer der Basisstationen (BS1) übertragen werden, wobei die Funksignale auf eine Vielzahl von aufeinanderfolgende Zeitschlitzen (SL11 mit SL25) verteilt werden, wobei jeder Zeitschlitz (SL12) nochmals in mehrere Zeitbereiche (DA1, MA, DA2, GP) unterteilt wird, und wobei mindestens einer dieser Zeitbereiche (DA1, MA, DA2, GP) jedes Zeitschlitzes (SL12) zur Übertragung von Nutznachrichten-/Nutzdaten der Funksignale vorbelegt wird,
**dadurch gekennzeichnet,**
**daß** bei mindestens einem Zeitschlitz (SL12) mindestens einer der Zeitbereiche (DA1), der für die Übertragung von Nutznachrichten-/Nutzdaten vorbelegt ist, anstelledessen teilweise oder ganz zum Senden und/oder Empfangen mindestens eines Meßsignals (LCS1) auf der Übertragungsstrecke zwischen dem jeweiligen zu ortenden Teilnehmergerät (UE31) und mindestens einer Basisstation (BS1), die von der Basisstation (BS3) in der Aufenthalts-Funkzelle (CE1) des Teilnehmergeräts (UE31) verschieden ist, bereitgestellt wird, und dass die Laufzeit (Δt1) dieses Meßsignals (LCS1) für seinen Laufweg zwischen der jeweiligen Basisstation (BS1) und dem jeweilig zu lokalisierenden Teilnehmergerät (UE31) ermittelt sowie zur Auswertung bereitgestellt wird.

2. Verfahren nach Anspruch 1,
**dadurch gekennzeichnet,**
**daß** jeweils mindestens ein Meßsignal (LCS1, LCS2) an das jeweilig zu lokalisierende Teilnehmergerät (UE31) von mindestens zwei Basisstationen (BS1, BS2) gesendet wird, die der Aufenthalts-Funkzelle (CE3) des Teilnehmergerätes (UE31) benachbart sind.

3. Verfahren nach einem der vorhergehenden Ansprüche,
**dadurch gekennzeichnet,**
**daß** während der jeweiligen Meßsignalübertragung die Basisstation (BS1), die der Aufenthalts-Funkzelle (CE3) des jeweilig zu ortenden Teilnehmergerätes (UE31) zugeordnet ist, in eine Ruhephase gebracht wird.

4. Verfahren nach einem der vorhergehenden Ansprüche,
**dadurch gekennzeichnet,**
**daß** dem jeweiligen Meßsignal (LCS1) ein eindeutiges Identifizierungskriterium derart zugeordnet wird, daß das jeweilig zu lokalisierende Teilnehmergerät (UE31) das jeweilig empfangene Meßsignal in eindeutiger Weise einer der Basisstationen (BS1, BS2) in einer der benachbarten Funkzellen (CE1, CE2) zuordnen kann.

5. Verfahren nach einer der vorhergehenden Ansprüche,
**dadurch gekennzeichnet,**
**daß** das Funkkommunikationssystem im UMTS-TDD-Mode betrieben wird.

6. Verfahren nach Anspruch 5,
**dadurch gekennzeichnet,**
**daß** als jeweiliges Meßsignal (LCS1) der Primary-Synchronisations-Code im UMTS-TDD-Standard gewählt wird.

7. Verfahren nach einem der vorhergehenden Ansprüche,
**dadurch gekennzeichnet,**
**daß** die Basisstationen (BS1, BS2), die der Basisstation (BS3) der Aufenthaltsfunkzelle (CE3) des jeweiligen Teilnehmergeräts (UE31) benachbart sind, zueinander synchronisiert werden.

8. Verfahren nach einem der vorhergehenden Ansprüche,
**dadurch gekennzeichnet,**
**daß** als Laufzeitkriterium des jeweiligen Meßsignals (LCS1) dessen zeitliche Verschiebung (Δt1) gegenüber dem Zeitraster der vorgegebenen Zeitschlitzfolge der Luftschnittstelle des jeweilig zu ortenden Teilnehmergeräts (UE31) herangezogen wird.

9. Verfahren nach einem der vorhergehenden Ansprüche,
**dadurch gekennzeichnet,**
**daß** das jeweilige Teilnehmergerät (UE31) bezüglich dem Zeitraster seiner Zeitschlitzabfolge durch die ihm in seiner Aufenthalts-Funkzelle (CE3) zugeordneten Basisstation (BS3) synchronisiert wird.

10. Verfahren nach einem der vorhergehenden Ansprüche,
**dadurch gekennzeichnet,**
**daß** als Teilnehmergerät ein Mobilfunkgerät, insbesondere Handy, verwendet wird.

11. Vorrichtung zur Positionsbestimmung mindestens eines Teilnehmergeräts eines Funkkommunikationssystems, das nach einem der vorhergehenden Ansprüche betrieben wird.
